# EUROPEAN PATENT APPLICATION

(11) **EP 4 702 843 A1**
(43) Date of publication of application: **04.03.2026**
(21) Application number: 24196487.3
(22) Date of filing: 26.08.2024
(51) Int. Cl.: A21B 3/13

(54) **A CARRIER, AN ASSEMBLY AND A METHOD FOR PREPARING DOUGH PRODUCTS IN AN OVEN**

(71) Applicant: Kaak Groep B.V., 7061 GA Terborg (NL)
(72) Inventor: VAN DER BORG, Lodewijk Stephanus Margaretha Joseph, 7061 GA Terborg (NL); VEROUDEN, Franciscus Quirinus Fredrik, 7061 GA Terborg (NL); VAN WEZEL, Michel Martinus Willem, 7061 GA Terborg (NL)
(74) Representative: Peters, Sebastian Martinus

(57) **Abstract**

The invention relates to a carrier, an assembly and a method for preparing dough products. The carrier comprises a series of containers arranged in series along a first direction comprising a first and second container at opposite ends of the series. Each pair of neighboring containers are spaced apart along the first direction to form an elongated inner air flow region. The carrier comprises a second direction perpendicular to the first direction. The carrier further comprises a first and second contact surface at opposite ends of the series forming a first and second elongated outer air flow region. A sum of a smallest air permeable surface area of the first and second outer air flow regions is 0.8 - 1.2 times a smallest air permeable surface area of one of the inner air flow regions based on a crosssection through said regions parallel to the first and second directions.

## Description

### BACKGROUND

The invention relates to a carrier, an assembly and a method for preparing dough products in an oven. The invention further relates a cover unit for covering containers of a carrier.

For a preparation of dough products, such as baking bread, use is commonly made of carriers each comprising multiple individual containers for holding the dough products during the preparation thereof in an oven. In a modern industrial setting, elongated tunnel ovens are often used to prepare the dough products. Here, a plurality of carriers are arranged in one or more rows which are then transported though a length of the oven to prepare the dough products held in the containers of each carrier.

US 2019/0150456 A1 discloses a carrier for baking bread on an industrial scale. The carrier comprises four elongated baking molds spaced apart along a transversal direction of the molds forming an elongated space between each mold. The carrier further comprises a tubular profile that encircles the molds acting as a reinforcing structure of the carrier and that protects the edges of the molds from wear. The tubular profile is mounted against the walls of the ends of each mold and separated from the longitudinal sides of the molds to further define a space for air circulation.

The carrier further comprises a plate acting as a cover of the molds, and a hook-based fastening device to prevent the plate from being displaced by the bread dough during baking. The fastening device is attached to the molds via an elongated bar joined to the tubular profile and arranged in the elongated space between the two center molds.

### SUMMARY OF THE INVENTION

A disadvantage of the known carriers is when multiple carriers are arranged in one or more rows in an oven, an air flow through the carrier along a vertical direction adjacent to each container of the carrier will differ depending on a position of the container within the carrier. In particular, a dough product prepared in a container arranged at or near an edge of the carrier experiences a different rate of heat exchange with the air flow in an oven compared to a dough product prepared in a container at or near a center of the carrier due to the different air flow adjacent to each container. As a result, for example, a browning of a prepared dough product will differ depending on the position of said dough product within the carrier during preparation thereof.

It is an object of the present invention to provide an improved carrier that, in particular when arranged in one or more rows, provides a more similar heat exchange between an oven and a container arranged at an end of the carrier, and the oven and a further container arranged at or near a center of the carrier.

According to a first aspect, the invention provides a carrier for preparing dough products, in particular baking bread products, in an oven, wherein the carrier comprises:
- a series of containers arranged mutually spaced apart and arranged in series along a first direction, wherein each container of the series of containers comprises a bottom wall and a side wall to provide a cavity for holding dough portions, wherein the bottom wall of each container extends substantially parallel to the first direction and a second direction perpendicular to the first direction, wherein the series of containers comprises at least a first and second container at opposite ends of the series along the first direction,
- one or more inner air flow regions each extending between the side walls of a pair of neighboring containers of the series of containers to, at least during use, allow a substantially vertical flow of air through the carrier between the side walls of said neighboring containers,
- an inner surface area defined as an air permeable surface area of a cross-section through one of the inner air flow regions with a smallest air permeable surface area of any cross-section through any of the inner air flow regions in a respective plane that extends parallel to the first and second directions,
- a frame that is attached to the series of containers and that comprises a first contact surface and a second contact surface for contacting a further carrier or a wall of the oven along the first direction, wherein the first contact surface is spaced apart from the side wall of the first container and extends substantially parallel to the second direction, wherein the second contact surface is spaced apart from the side wall of the second container and extends substantially parallel to the second direction,
- a first virtual plane substantially perpendicular to the first direction and that extends through the first contact surface,
- a first outer air flow region extending between the side wall of the first container and the first virtual plane to, at least during use, allow a substantially vertical flow of air through the carrier adjacent to the side wall of the first container,
- a first outer surface area defined as an air permeable surface area of a cross-section through the first outer air flow region with a smallest air permeable surface area of any cross-section through the first outer air flow region in a respective plane that extends parallel to the first and second directions,
- a second virtual plane substantially perpendicular to the first direction and that extends through the second contact surface,
- a second outer air flow region extending between the side wall of the second container and the second virtual plane to, at least during use, allow a substantially vertical flow of air through the carrier adjacent to the side wall of the second container, and
- a second outer surface area defined as an air permeable surface area of a cross-section through the second outer air flow region with a smallest air permeable surface area of any cross-section through the second outer air flow region in a respective plane that extends parallel to the first and second directions, and wherein a sum of the first and second outer surface areas is in a range from 0.8 to 1.2 times the inner surface area.

The inventors have realized that, at least during use, the vertical air flow through each air flow region is substantially determined by whichever portion of the air flow region that provides the largest restriction to the air flowing through the air flow region. In particular, a cross-section in a plane parallel to the first and second directions through the air flow region with a smallest air permeable surface area of any one cross-section through the air flow region in a respective plane that extends parallel to the first and second directions, substantially determines the vertical air flow that will occur during use of the carrier.

Accordingly, when a first carrier and a second carrier according to the present invention are adjacently arranged within a row in an oven, with a first contact surface of the first carrier contacting a second contact surface of the second carrier, the first and second air flow regions together provide a combined air flow through which air can flow along a substantially vertical direction between the two neighboring carriers that is substantially similar to each inner air flow region present between each pair of neighboring containers within each carrier. As a result, a dough portion that is arranged in the first container or in the second container, and thus at an end of the carrier, experiences a heat exchange due to the air flow though the first and second outer air flow regions on one side, that is substantially similar to a heat exchange experienced by the dough portion at an opposite side of the container due to the air flow through the adjacent inner air flow region.

Furthermore, the heat exchange experienced by said dough portion is substantially similar to a heat exchange experienced by a further dough portion in a container near a center of each carrier due to the air flow through the adjacent inner air flow regions. Accordingly, the carrier according to the present invention provides a heat exchange between each container and the oven that is substantially independent of a location of said container within the carrier.

It is noted that during use, the carrier is arranged in an oven with the bottom walls of the containers in a substantially horizontal plane, and thus the first and second directions extending in said horizontal plane, and that in this situation the oven provides a substantially vertical flow of hot air through the oven. It is further noted that the feature `in a range from 0.8 to 1.2 times' describes a range with 0.8 and 1.2 as end points, including the endpoints and all values therein between.

One of the advantages of a more uniform heat exchange between each container and the oven, is that the prepared dough products are substantially more uniformly browned. This is particularly advantageous when the carrier according to the present invention is used to prepare bread products, as consumers prefer a substantially uniformly browned bread product, and a substantially similar browning between different bread products. In a preferred embodiment, the sum of the first and second outer surface areas is in a range from 0.9 to 1.1 times, or preferably from 0.95 to 1.05 times the inner surface area. Most preferably, the first and second outer surface areas are each substantially equal to half the inner surface.

In an embodiment, the side wall of each container comprises an upper rim and a lower rim that respectively face away from and toward the bottom wall, wherein the first outer air flow region extends substantially fully along the side wall of the first container between the bottom rim and the upper rim, wherein the second outer air flow region extends substantially fully along the side wall of the second container between the bottom rim and the upper rim, and wherein each inner air flow region extends substantially fully between the bottom rim and the upper rim of each side wall of said pair of neighboring containers. This provides for more uniform heat exchange, and thus browning, of the prepared dough product between a corresponding top to bottom portion of the dough product. Accordingly, this reduces a formation of band-like sections or other sections on the resulting prepared dough product with, for example, a different browning compared to the rest of a surface of the dough product.

In an embodiment, the carrier further comprises a first outer spacing distance defined as a smallest distance between the upper rim of the first container and the first virtual plane, a second outer spacing distance defined as a smallest distance between the upper rim of the second container and the second virtual plane, and an inner spacing distance defined as a smallest distance between a pair of upper rims of any one pair of neighboring containers of the series of containers, wherein a sum of the first and second outer spacing distances is in a range from 0.8 to 1.2 times the inner spacing distance. In particular when a loading of the oven with a plurality of carriers is automatized via a loading apparatus which pushes each carrier together into one or more rows. A predefined spacing between two neighboring containers in different neighboring carriers provided or enforced by the first and second contact surfaces of the frame yields a more optimized space utilization of the oven. Here, an excessively large distance between said neighboring containers, which causes a reduction in a space utilization of the oven, or an excessively small distance between said neighboring containers, which causes a degradation in the uniformity of the heat exchange between the oven and each container, are avoided. In a preferred embodiment, the sum of the first and second outer spacing distances is in a range from 0.9 to 1.1 times, preferably from 0.95 to 1.05 times, or most preferably substantially equal to, the inner spacing distance. Furthermore, the first and second outer spacing distances are preferably substantially equal which provides for a substantially symmetric carrier, which simplifies loading of the carrier in the oven. In particular when the carrier is used in combination with an oven that provides a flow of air along a vertical direction through the carrier with an airspeed in a range from 0.5 to 2 meters per second, and more preferably less than 1.5 meters per second, the inner spacing distance is in a range from 25 to 35 mm, more preferably substantially 30 mm.

In an embodiment, the first outer air flow region extends substantially fully along the side wall of the first container in the second direction, wherein the second outer air flow region extends substantially fully along the side wall of the second container in the second direction, and wherein each inner air flow region extends substantially fully along each side wall of said pair of neighboring containers in the second direction. Accordingly, a pair of opposing sides of a dough portion which during preparation are arranged adjacent to the first outer air flow region and one of the inner air flow regions, to two inner air flow regions, or the second outer air flow region and one of the inner air flow regions, will be substantially uniformly heated along the entire side of the dough portion. This is especially advantageous when the containers are substantially elongated along the second direction and used to prepare bread products, as this provides a bread product with a similar browning along each longitudinal side which is strongly preferred by most consumers.

In an embodiment, the side wall of each container of the series of containers further comprises an outer surface that faces away from and substantially envelops the respective cavity of said container, wherein the outer surface of each side wall comprises a first part facing towards the first contact surface and a second part facing towards the second contact surface, wherein at least the first and second parts of the outer surface of each side wall are freestanding between the lower rim and the upper rim of said side wall, preferably wherein at least 70 % of the outer surface of each container is freestanding, and more preferably where less than 99 % of the outer surface of each container is freestanding. It is to be understood that the wording 'freestanding' refers to no further components or elements, in particular a band or frame, in direct contact with said part of the outer surface and thus allowing a direct contact between an air flow through the carrier and said part of the outer surface. A disadvantage of the known carriers is that they comprise elements such as a band or a frame that envelops each container and that directly contacts or covers the side walls of said containers. In particular, the carrier disclosed in US 2019/0150456 A1 comprises a band that is directly attached to an upper portion of the longitudinal walls of the containers arranged at either end of the carrier. A presence of such a band or frame restricts or interrupts an air flow adjacent to the containers along a vertical direction and at least locally changes a heat exchange between the side wall and the oven environment due to a covering of an outer surface of the side wall by the band. This in turn leads to, for example, a local variation in a browning on an outer surface of the prepared dough product or between an outer surface of dough products prepared in different containers within the carrier. The present embodiment in contrast permits, at least during use, a substantially direct contact between the outer surface and the air flowing through one of the respectively air flow regions. In particular, the dough product prepared in the first container or the second container are more uniformly heated and/or browned. Furthermore, the lack of a band, frame or other covering increases an heat exchange between the oven and the container, which may in turn allow for a shorter residence time of the dough product in the oven or a decrease in a flow velocity of the air in the oven when a forced convection oven is used.

In an embodiment, the carrier further comprises a plurality of spacing elements that are each elongated along a plane substantially perpendicular to the bottom wall of the first container, wherein one or more spacing elements of the plurality of spacing elements extend outwards from an outer surface of the first container through the first outer air flow region to the frame, and/or wherein one or more spacing elements of the plurality of spacing elements extend outwards from an outer surface of the second container through the second outer air flow region to the frame, preferably wherein the frame is solely connected to the series of containers via the plurality of spacing elements. Preferably, the plurality of spacing elements have a rib, fin or plate-like shape. Accordingly, the thin, elongated spacing elements can extend through the air flow regions without providing a significant obstruction of the vertical flow of air through the carrier adjacent to the containers. It is noted that said spacing elements tend to subdivide the corresponding air flow region to form a plurality of openings that each allow an substantially vertical flow of air through said air flow region. Accordingly, each of the formed openings contributes to the air permeable surface area of the corresponding air flow region.

In an embodiment, the frame further comprises a third contact surface and a fourth contact surface for contacting a further carrier or a wall of the oven along the second direction, wherein the third and fourth contact portions are arranged at opposite sides of the series of containers along the second direction and extend substantially parallel to the second direction, wherein the carrier further comprises: a third virtual plane substantially perpendicular to the second direction and that extends through the third contact surface; a third outer air flow region extending between the third virtual plane and the side wall of each container of the series of containers to, at least during use, allow a substantially vertical flow of air through the carrier adjacent to the side wall of the each container; a fourth virtual plane substantially perpendicular to the second direction and that extends through the fourth contact surface; a fourth outer air flow region extending between the fourth virtual plane and the side wall of each container of the series of containers to, at least during use, allow a substantially vertical flow of air through the carrier adjacent to the side wall of the each container; a third outer spacing distance defined as a smallest distance between the upper rim of any one of the containers and the third virtual plane, and a fourth outer spacing distance defined as a smallest distance between the upper rim of any one of the containers and the fourth virtual plane, wherein a sum of the third and fourth outer spacing distances is a range from 0.8 to 1.2 times the inner spacing distance. When a first carrier and a third carrier each according to the present embodiment are arranged adjacently in, for example, two different adjacent rows of carriers, with a third contact surface of the first carrier contacting a fourth contact surface of the second carrier, the third and fourth air flow regions together provide a combined air flow through which air can flow along a substantially vertical direction between the two neighboring carriers that is substantially similar to each inner air flow region present between each pair of neighboring containers within each carrier. Accordingly, the side wall of each container of the series of containers is substantially fully surrounded by an air flow region which, when the carrier is arranged in one or more rows, provides a uniform heat transfer at each side of the side wall. Accordingly, each side of a dough portion prepared in one of the containers of a carrier according to the present embodiment experiences a substantial uniform heating in the oven. In particular, when a rectangular elongated container is used, both a longitudinal side and a transversal side of the prepared dough product receives a substantially similar amount of heat, and thus browning. In a preferred embodiment, the sum of the third and fourth outer spacing distances is in a range from 0.9 to 1.1 times, or preferably from 0.95 to 1.05 times, or most preferably equal to the inner spacing distance.

In an embodiment, the series of containers is a first series of containers, wherein the carrier further comprises a second series of containers arranged mutually spaced apart and arranged in series along the first direction, wherein each container of the second series of containers is substantially similar to the first container of the first series of containers, wherein the second series of containers comprises at least a third and fourth container at opposite ends of the series along the first direction, wherein the inner air flow regions that extend between each neighboring pair of containers of the first series of containers further extend along the second direction between the side walls of a neighboring pair of neighboring containers of the second series of containers to, at least during use, allow a substantially vertical flow of air through the carrier adjacent to said side walls, wherein the first contact surface further extends along the second direction adjacent to the third container, wherein the first outer air flow region further extends between the first virtual plane and the side wall of the third container to, at least during use, allow a substantially vertical flow of air through the carrier adjacent to the side wall of the third container, wherein the second contact surface further extends along the second direction adjacent to the fourth container, wherein the second outer air flow region further extends between the second virtual plane and the side wall of the fourth container to, at least during use, allow a substantially vertical flow of air through the carrier adjacent to the side wall of the fourth container. In the known carriers which comprise two adjacently arranged series of containers, the carriers tend to comprise an especially large amount of reinforcing materials, such as reinforcing bands or frames having an especially large thickness along a horizontal plane. This increased amount of reinforcing material exacerbates a difference in air flow through the carrier at different locations within the carrier, in particular at the ends of the carrier. Accordingly, the present embodiment provides an particularly increased uniformity in the air flow, and thus heat exchange, compared to known carriers with at least two series of containers.

In a preferred embodiment, the frame further comprises a third contact surface and a fourth contact surface for contacting a further carrier or a wall of the oven along the second direction, wherein the third and fourth contact surfaces extend substantially parallel to the first direction, and are arranged at opposite ends of the carrier along the second direction,
wherein the carrier further comprises: a third virtual plane substantially perpendicular to the second direction and that extends through the third contact surface; a third outer air flow region extending between the third virtual plane and the side wall of each container of the first series of containers to, at least during use, allow a substantially vertical flow of air through the carrier adjacent to the side wall of the each container of the first series of containers; a third outer surface area defined as an air permeable surface area of a cross-section through the third outer air flow region with a smallest air permeable surface area of any cross-section through the third outer air flow region in a respective plane that extends parallel to the first and second directions; a fourth virtual plane substantially perpendicular to the second direction and that extends through the fourth contact surface; a fourth outer air flow region extending between the fourth virtual plane and the side wall of each container of the second series of containers to, at least during use, allow a substantially vertical flow of air through the carrier adjacent to the side wall of the each container of the second series of containers; a fourth outer surface area defined as an air permeable surface area of a cross-section through the fourth outer air flow region with a smallest air permeable surface area of any cross-section through the fourth outer air flow region in a respective plane that extends parallel to the first and second directions, wherein each container of first series of containers is spaced apart from each container of the second series of containers along the second direction to form an elongated second inner air flow region to, at least during use, allow a substantially vertical flow of air through the carrier adjacent to each side wall; and a second inner surface area defined as an air permeable surface area of a cross-section through the second inner air flow region with a smallest air permeable surface area of any cross-section through the second inner air flow regions in a respective plane that extends parallel to the first and second directions, wherein a sum of third and fourth outer surface areas is a range from 0.8 to 1.2 times the second inner surface area. This provides for a carrier provided with multiple series of containers, wherein each container is provided with a substantially similar and uniform air flow substantially independent of said container within the carrier. In a preferred embodiment, the sum of third and fourth outer surface areas is in a range from 0.9 to 1.1 times, or preferably from 0.95 to 1.05 times, the second inner surface area. Preferably, the third outer surface area is substantially similar to fourth outer surface area.

In an embodiment, the frame forms a peripheral edge of the carrier that substantially fully envelops all containers of the carrier.

In an embodiment, the first, second, third and fourth outer air flow regions together substantially fully envelop all containers of the carrier.

According to a second aspect, the invention provides an assembly for preparing dough products, in particular baking bread products, in an oven, wherein the assembly comprise a first carrier and a second carrier, wherein the first and second carrier each comprise:
- a series of containers arranged mutually spaced apart and arranged in series along a first direction, wherein each container of the series of containers comprises a bottom wall and a side wall to provide a cavity for holding dough portions, wherein the bottom wall of each container extends substantially parallel to the first direction and a second direction perpendicular to the first direction, wherein the series of containers comprises at least a first and second container at opposite ends of the series along the first direction;
- one or more inner air flow regions each extending between the side walls of a pair of neighboring containers of the series of containers to, at least during use, allow a substantially vertical flow of air through the carrier between the side walls of said neighboring containers;
- an inner surface area defined as an air permeable surface area of a cross-section through one of the inner air flow regions with a smallest air permeable surface area of any cross-section through any of the inner air flow regions in a respective plane that extends parallel to the first and second directions; and
- a frame that is attached to the series of containers and that comprises a first contact surface and a second contact surface for contacting a further carrier or a wall of the oven along the first direction, wherein the first contact surface is spaced apart from the side wall of the first container and extends substantially parallel to the second direction, wherein the second contact surface is spaced apart from the side wall of the second container and extends substantially parallel to the second direction,

wherein the first contact surface of the first carrier abuts the second contact surface of the second carrier, wherein the assembly further comprises:
   - an inter carrier air flow region that extends between the side wall of the first container of the first carrier and the second container of the second container to, at least during use, allow a substantially vertical flow of air through the first carrier and the second carrier, and
   - an inter carrier surface area defined as an air permeable surface area of a cross-section through the inter carrier air flow region with a smallest air permeable surface area of any cross-section through the inter carrier air flow region in a respective plane that extends parallel to the first and second directions of the first carrier,
wherein the inter carrier surface area is in a range from 0.8 to 1.2 times the inner surface area of the first carrier. In a preferred embodiment, the inter carrier surface area is in a range from 0.9 to 1.1 times, or preferably from 0.95 to 1.05 times, the inner surface area of the first carrier. The above assembly provides substantially the same advantages as discussed above with respect to the first aspect of the invention.

In an embodiment, the side wall of each container of the first carrier comprises an upper rim that faces away from the respective bottom wall, wherein the side wall of each container of the second carrier comprises an upper rim that faces away from the respective bottom wall, wherein a smallest distance between the upper rims of a pair of neighboring containers of the first carrier is in a range from 0.8 to 1.2 times, preferably 0.9 to 1.1 or more preferably 0.95 - 1.05, a smallest distance between the upper rim of the first container of the first carrier and the upper rim of the second container of the second carrier.

According to a third aspect, the invention provides an assembly comprising a carrier according to the first aspect or any one embodiment thereof and a cover unit, wherein the cover unit comprises:
- a series of cover elements arranged mutually spaced apart and arranged in series along the first direction, wherein each cover element is arranged on an upper rim of one of the containers of the series of containers to provide a substantially fully enclosed cavity for holding dough portions, wherein the series of cover elements comprises at least a first cover element and a second cover element arranged at opposite ends of the series of cover elements along the first direction,
- one or more inner cover air flow regions each extending between a pair of neighboring cover elements of the series of cover elements to, at least during use, allow a substantially vertical flow of air through the cover unit between said neighboring cover elements, wherein the inner cover air flow region that extends between each pair of neighboring cover elements is in flow connection with the inner air flow region that extends between the pair of neighboring containers on which said pair of neighboring cover elements is arranged,
- an inner cover surface area defined as an air permeable surface area of a cross-section through one of the inner cover air flow regions with a smallest air permeable surface area of any cross-section through any one of the inner cover air flow regions in a respective plane that extends parallel to the first and second directions,
- a first outer cover air flow region extending between the first cover element and the first virtual plane to, at least during use, allow a substantially vertical flow of air through the cover unit adjacent to the first cover element, wherein the first outer cover air flow region is in flow connection with the first outer air flow region of the carrier,
- a first outer cover surface area defined as an air permeable surface area of a cross-section through the first outer cover air flow region with a smallest air permeable surface area of any cross-section through the first outer cover air flow region in a respective plane that extends parallel to the first and second directions,
- a second outer cover air flow region extending between the second cover element and the second virtual plane to, at least during use, allow a substantially vertical flow of air through the cover unit adjacent to the second cover element, wherein in the second outer cover air flow region is in flow connection with the second outer air flow region of the carrier, and
- a second outer cover surface area defined as an air permeable surface area of a cross-section through the second outer cover air flow region with a smallest air permeable surface area of any cross-section through the second outer cover air flow region in a respective plane that extends parallel to the first and second directions, wherein a sum of the first and second outer cover surface areas is in a range from 0.8 to 1.2 times the inner cover surface area. Preferably, said sum is in a range from 0.9 to 1.1 times, more preferably from 0.95 to 1.05 times, or most preferably substantially equal to the inner cover surface area. The above assembly provides substantially the same advantages as discussed above with respect to the first aspect of the invention.

In an embodiment, the cover unit comprises: a first outer cover spacing distance defined as a smallest distance between the first cover element and the first virtual plane; a second outer cover spacing distance defined as a smallest distance between the second cover element and the second virtual plane; an inner cover spacing distance defined as a smallest distance between the cover elements of any one pair of neighboring cover elements, wherein a sum of the first and second cover outer spacing distances is in a range from 0.8 to 1.2 times the inner cover spacing distance. Preferably, said sum is in a range from 0.9 to 1.1 times, more preferably from 0.95 to 1.05 times, or most preferably substantially equal to the inner cover spacing distance.

According to a fourth aspect, the invention provides a cover unit comprising a series of cover elements for covering a series of containers of a carrier to provide a series of substantially enclosed cavities for holding dough portions, wherein the cover elements of the series of cover elements are arranged in series along a first direction, wherein each cover element extends substantially parallel to the first direction and a second direction substantially perpendicular to the first direction, wherein the series of cover element comprises at least a first and second cover element arranged at opposite ends of the series along the first direction,
wherein the cover unit further comprises:
- one or more inner air permeable sections each interposed between a pair of neighboring cover elements to, at least during use, allow a flow of air substantially perpendicular to the first and second directions through the cover unit between said pair of neighboring cover elements,
- an inner cover surface area defined as an air permeable surface area of a cross-section through one of the inner air permeable sections with a smallest air permeable surface area of any cross-section through any one of the inner air permeable sections in a respective plane that extends parallel to the first and second directions,
- an outer rim that is attached to the series of cover elements and that comprises a first outer surface and a second outer surface, wherein the first and second outer surfaces each extend substantially parallel to the second direction and face away from the series of cover elements,
- a first virtual cover plane substantially perpendicular to the first direction and that extends through the first outer surface,
- a first cover outer air flow region extending between the first cover element and the first virtual cover plane to, at least during use, allow a substantially vertical flow of air through the cover unit adjacent to the first cover element,
- a first cover outer surface area defined as an air permeable surface area of a cross-section through the first cover outer air flow region with a smallest air permeable surface area of any cross-section through the first cover outer air flow region in a respective plane that extends parallel to the first and second directions,
- a second virtual cover plane substantially perpendicular to the first direction and that extends through the second outer surface,
- a second cover outer air flow region extending between the second cover element and the second virtual cover plane to, at least during use, allow a substantially vertical flow of air through the cover unit adjacent to the second cover element, and
- a second cover outer surface area defined as an air permeable surface area of a cross-section through the second cover outer air flow region with a smallest air permeable surface area of any cross-section through the second cover outer air flow region in a respective plane that extends parallel to the first and second directions, and wherein a sum of the first and second cover outer surface areas is in a range from 0.8 to 1.2 times the cover inner surface area. Preferably said sum is in a range from 0.9 to 1.1 times, more preferable 0.95 to 1.05 times, the cover inner surface area.

A disadvantage of the known cover units, such as the cover plate disclosed by US 2019/0150456 A1, is that when they are arranged adjacently on a pair of carriers an air flow through the cover unit along a vertical direction adjacent to each cover element will differ depending on a position of the cover element within the cover unit. In particular, a dough portion prepared in a container covered by an cover element at an end of the cover unit, experiences a different rate of heat exchange with an oven compared to a dough portion prepared in a container covered by an cover element at or near an edge of the cover unit due to the different air flow adjacent to each cover element of the cover unit. As a result, for example, a browning of a prepared dough product will differ depending on the position of said dough product within the carrier, and thus relative to the cover unit, during preparation thereof.

The inventors have realized that, at least during use, the vertical air flow through each air flow region is substantially determined by whichever portion of the air flow region that provides the largest restriction to the air flowing through the air flow region. In particular, a cross-section in a plane parallel to the first and second directions through the air flow region with a smallest air permeable surface area of any one cross-section through the air flow region in a respective plane that extends parallel to the first and second directions, substantially determines the vertical air flow that will occur during use of the carrier.

When a first cover unit and a second cover unit according to the present aspect are adjacent arranged within an oven, for example on two adjacent carriers according to the first aspect or any one embodiment thereof in a row, the adjacently arranged first and second cover outer air flow regions together provide a combined region through which air can flow along a substantially vertical direction between the two neighboring cover units, and thus carriers, that is substantially similar to the air flow through each inner cover inner permeable section present between each pair of neighboring cover elements within each cover unit, and thus each neighboring container within each carrier. As a result, a dough portion prepared in a container at an end of the carrier, covered by either the first or second cover element, experiences a heat exchange due to the air flow though the first and second cover outer air flow regions on one side, that is substantially similar to a heat exchange experienced by the dough product at an opposite side of the container due to the air flow through the adjacent inner cover air permeable section.

Furthermore, the heat exchange experienced by said dough portion prepared in the container at the end of the carrier is substantially similar to a heat exchange experienced by a further dough portion in container near a center of each carrier due to the air flow through the adjacent inner air permeable sections of the cover unit. Accordingly, the cover unit according to the present invention provides a heat exchange between each container and the oven that is substantially independent of a location of said container within the carrier. In a preferred embodiment, the sum of the first and second cover outer surface areas is in a range from 0.9 to 1.1 times, or preferably from 0.95 to 1.05 times, the cover inner surface area.

In an embodiment, the cover unit further comprises: a first cover outer spacing distance defined as a smallest distance between the first cover element and the first virtual cover plane; a second cover outer spacing distance defined as a smallest distance between the second cover element and the second virtual cover plane; and an inner cover spacing distance defined as a smallest distance between the cover elements of any one pair of neighboring cover elements, and wherein a sum of the first and second cover outer spacing distances is in a range from 0.8 to 1.2 times the inner cover spacing distance. Preferable, said sum is in a range from 0.9 to 1.1 times, more preferable 0.95 - 1.05 times, the inner cover spacing distance.

In an embodiment, the first outer cover air flow region extends substantially fully along the first cover element along the second direction, wherein the second outer cover air flow region extends substantially fully along the second cover element along the second direction, and wherein each inner air permeable section extends substantially fully along each cover element of a neighboring pair of cover elements in the second direction.

In an embodiment, the cover unit further comprises: a first outer air permeable section directly adjacent to the first cover element and wherein the first outer surface of the outer rim is formed by an outer surface of the first outer air permeable section facing away from the first cover element; a second outer air permeable section directly adjacent to the second cover element and wherein the second outer surface of the outer rim is formed by an outer surface of the second outer air permeable section facing away from the second cover element, wherein the first outer air permeable section, the second outer air permeable section and each inner air permeable section each comprise one or more openings to, at least during use, allow a flow of air substantially perpendicular to the first and second directions through respectively the first outer air permeable section, the second outer air permeable section and each inner air permeable section.

According to a fifth aspect, the invention provides an assembly comprising a cover unit according to the fourth aspect or any one embodiment thereof, and further comprises a carrier according to the first aspect or any one embodiment thereof, wherein each cover element of the cover unit is arranged on an upper rim of one of the containers of the carrier. The above assembly provides substantially the same advantages as discussed above with respect to the fourth aspect of the invention.

According to a sixth aspect, the invention provides a method for preparing dough products, in particular baking bread products, in an oven, wherein the method comprises the following steps:
- providing a first carrier according to the first aspect or any one embodiment thereof, and arranging a first dough product in the first container of the first carrier,
- providing a second carrier according to the first aspect or any one embodiment thereof, and arranging a second dough product in the second container of the second carrier,
- arranging the second carrier such that the second portion of the frame of the second carrier abuts the first portion of the frame of the first carrier, and
- preparing the first and second dough products in the oven by providing a substantially vertical airflow through the first carrier and/or second carrier. Preferably, the step of arranging a first dough product in the first container of the first carrier further comprises providing each container of the first carrier with the first dough product, and the step of arranging a second dough product in the second container of the second carrier further comprises providing each container of the second carrier with the second dough product.

The above method provides substantially the same advantages as discussed above with respect to the first aspect of the invention.

In an embodiment, the method further comprises the following steps:
after the step of arranging the first dough product in the first container and before the step of preparing the first dough product, providing a first cover unit according to the fourth aspect or any one embodiment thereof, and arranging each cover element of the first cover unit on an upper rim of one of the containers of the first carrier, and
after the step of arranging the second dough product in the second container and before the step of preparing the second dough product, providing a second cover unit according to the fourth aspect or any one embodiment thereof, and arranging each cover element of the second cover unit on an upper rim of one of the containers of the second carrier.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A - 1D show a first example of a carrier comprising a series of containers for preparing dough products, wherein figure 1B shows a top down view of the carrier and figures 1C and 1D respectively show a cross-section of figure 1B,
Figures 2A - 2C schematically show an assembly comprising an industrial oven and a plurality of carriers according to the first example, wherein figures 2B and 2C respectively show a partial cross-section of figure 2A,
Figure 3 show a partial top down view of a second example of a carrier,
Figure 4 shows a third example of a carrier comprising two adjacent series of containers,
Figures 5A - 5C show an assembly comprising a carrier according to the first example and a first example of a cover unit for covering each container of the carrier, wherein figures 5B and 5C respectively show a cross-section of figure 5A,
Figures 6A and 6B show a second example of a cover unit, wherein figure 6A shows a top down view of the cover unit, and figure 6B shows a cross-section the cover unit, and
Figure 7 shows a top down view of a third example of a cover unit.

### DETAILED DESCRIPTION OF THE INVENTION

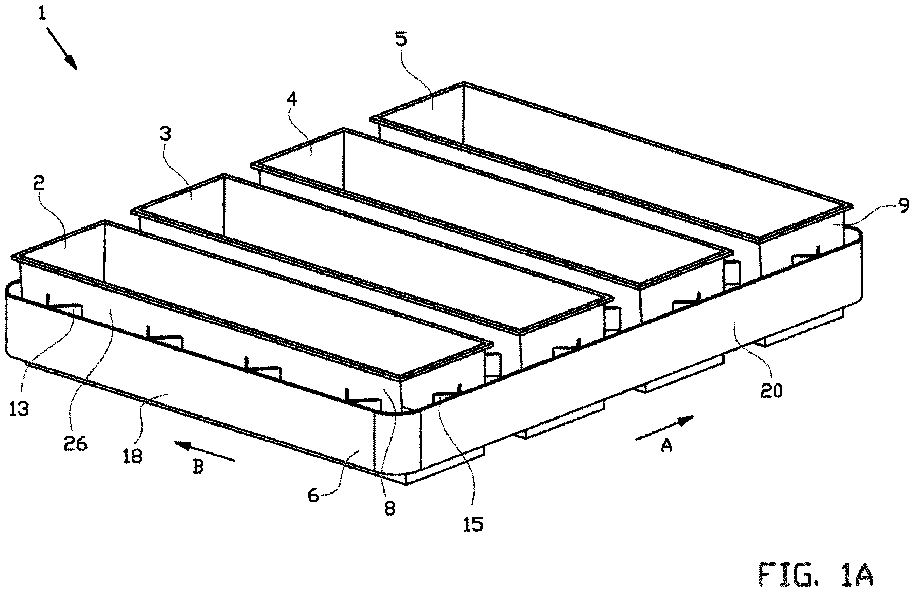

Figures 1A - 1D show a first example of a carrier 1 according to the present invention for preparing dough products in an oven, in particular for baking bread products in a forced convection tunnel oven. The carrier 1 comprises a series of elongated containers 2 - 5 arranged in series along a first direction A. The series of containers 2 - 5 comprises a first container 2 and a second container 3 arranged at opposite ends of the carrier 1 along the first direction A. Each container 2 - 5 is shown to comprise an elongated, rectangular bottom wall 7 and an enveloping side wall 8, 9 attached to a circumference of the bottom wall 7 to provide a cavity for holding dough portions. Each bottom wall 7 of the containers 2 - 5 extends substantially parallel to the first direction A and to a second direction B substantially perpendicular to the first direction A. The first direction A is substantially parallel to a transversal direction and perpendicular to a longitudinal direction of each container 2 - 5. At least during use, the first and second direction A, B are substantially parallel to a horizontal plane. Furthermore, the side wall 8, 9 of each container 2 - 5 comprises an upper rim 25, 25' and a lower rim 24, 24' that respectively face away from and toward the bottom wall 7.

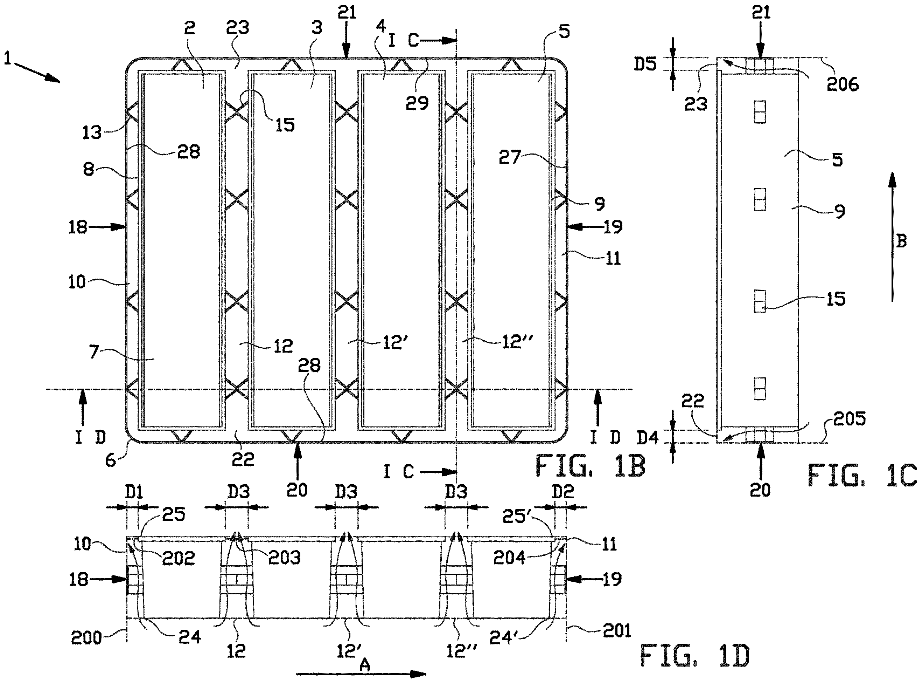

As best seen in the figures 1B and 1D, the carrier 1 further comprises a frame 6 that is attached to and substantially envelops the series of containers 2 - 5 for contacting a further carrier or a wall of the oven. In particular, the frame 6 prevents each container 2 - 5 from directly contacting a further carrier or a wall of the oven in order to allow a vertical flow of air through the carrier 1 adjacent to each container 2 - 5. The frame 6 comprises a first contact surface 18 and a second contact surface 19 that each extend substantially parallel to the second direction B. Furthermore, the first contact surface 18 is arranged adjacent to and spaced apart from the first container 2 and extends substantially fully along the side wall 8 of the first container 2. The second contact surface 19 is arranged adjacent to and spaced apart from the second container 5 and extends substantially fully along the side wall 9 of the second container 2. Accordingly, the first and second contact surfaces 18, 19 are arranged at opposite ends of the carrier 1 along the first direction A for contacting a further carrier or a wall of the oven along the first direction A.

The figures 1A - 1D further show that the carrier 1 comprises a plurality of outer spacer elements 13 for spacing apart the frame 6, and thus the first and second contact surfaces 18, 19, from the series of containers 2 - 5. Furthermore, the carrier 1 comprises a plurality of inner spacer element 15 for mutually spacing apart each of the containers 2 - 5. Furthermore, the side wall 8, 9 of each container 2 - 5 of the series of containers comprises an outer surface 26 that faces away from and substantially envelops the respective cavity of said container. Each of outer and inner spacer elements 13, 15 is shown to extend outwards from the outer surface 26 of a respective container 2 - 5 towards and connected to the frame 6. Each of the outer surfaces 26 is shown to be substantially free from any further components, elements or bands other than the outer and inner spacer elements 13, 15.

As best seen in figure 1D, the carrier 1 comprises a first virtual plane 200, or reference plane, extending perpendicular to the first direction A and extending through the first contact surface 18. Furthermore, the carrier 1 comprises a second virtual plane 201 extending perpendicular to the first direction A and extending through the second contact surface 19. Accordingly, the first and second virtual planes 200, 201 are arranged at the outermost ends of the carrier 1 along the first direction A, and, at least during use, are parallel to a vertical direction.

The carrier 1 further comprises a first outer air flow region 10 that is delimited by the side wall 8 of the first container 2 and the first virtual plane 200 to, at least during use, allow a substantially vertical flow of air through the carrier 1 adjacent to said side wall 8. Furthermore, the first outer air flow region 10 extends substantially fully along the side wall 8 of the first container 2 between the bottom rim 24 and the upper rim 25, and extends substantially fully along the side wall 8 of the first container 2 in the second direction B. The inventors have released that a vertical air flow through the first outer air flow region 10 is limited or restricted most significantly by a cross-section through a plane 202 that extends parallel to the first and second directions A, B that has a smallest air permeable surface area of any cross-section through the first outer air flow region in a respective plane parallel to the first and second directions A, B. The air permeable surface area of the cross-section with a smallest air permeable surface area is defined as a first outer surface area. In the present example, the smallest air permeable surface area is formed by the gap between the upper rim 25 of the first container and the first contact surface 18.

The carrier 1 further comprises a second outer air flow region 11 substantially similar to the first outer air flow region 10. The second outer air flow region 11 is shown to extend between the side wall 9 of the second container 5 and the second virtual plane 201 to, at least during use, allow a substantially vertical flow of air through the carrier 1 adjacent to said side wall 9. The second outer air flow region 11 extends substantially fully along the side wall 9 of the second container 5 between the bottom rim 24' and the upper rim 25', and extends substantially fully along the side wall 9 of the second container 5 in the second direction B. Comparable to the first outer surface area, the carrier 1 further comprises a second outer surface area defined as an air permeable surface area of a cross-section through the second outer air flow region 11 with a smallest air permeable surface area of any cross-section through the second outer air flow region 11 in a respective plane that extends parallel to the first and second directions A, B. The cross-section that comprises the smallest air permeable surface area, and thus the second outer surface area, is shown to extend along a plane 204 between the upper rim 25' of the second container 5 and the second virtual plane 201.

The carrier 1 further comprises three inner air flow regions 12, 12', 12'' each extending between the side walls 8, 9 of a pair of neighboring containers of the series of containers 2 - 5 to, at least during use, allow a substantially vertical flow of air through the carrier 1 between the side walls 8, 9 of said neighboring containers. Each inner air flow region 12, 12', 12" extends substantially fully between the bottom rim 24, 24' and the upper rim 25, 25' of each side wall 8, 9 of said pair of neighboring containers 2 - 5. Furthermore, each inner air flow region 12, 12', 12" extends substantially fully along each side wall 8, 9 of said pair of neighboring containers 2 - 5 in the second direction B. The carrier 1 further comprises an inner surface area defined as an air permeable surface area of a cross-section through one of the inner air flow regions 12, 12', 12'' with a smallest air permeable surface area of any cross-section through any of the inner air flow regions 12, 12', 12'' in a respective plane that extends parallel to the first and second directions A, B. In the present example, each inner air flow region 12, 12', 12'' is substantially identical. Furthermore, the inner surface area is shown to be provided by a cross-section through a plane 203 that extends between the upper rim 25 of the first container 2 and the upper rim of the container 3 adjacent to the first container 2.

A sum of the first and second outer surface areas is shown in the present example to be substantially equal to the inner surface area. Accordingly, a combined air flow along a vertical direction of the first and second outer air flow regions 10, 11 is substantially the same as the air flow along a vertical direction through each of the inner air flow regions 12, 12', 12''.

The carrier 1 further comprises a first outer spacing distance D1 defined a smallest distance between the upper rim 25 of the first container 2 and the first virtual plane 200. Furthermore, the carrier 1 comprises a second outer spacing distance D2 defined a smallest distance between the upper rim 25' of the second container 5 and the second virtual plane 201. Furthermore, the carrier 1 comprises an inner spacing distance D3 defined as a smallest distance between a pair of upper rims 25, 25' of any one pair of neighboring containers of the series of containers 2 - 5. In the present example, a sum of the first and second outer spacing distances D1, D2 is shown to substantially equal to the inner spacing distance D3. Furthermore, the first and second outer spacing distances D1, D2 are substantially equal in the present example.

As best seen in the figures 1B and 1C, the frame 6 further comprises a third contact surface 20 and a fourth contact surface 21 that each extend substantially parallel to the first direction A. The third and fourth contact surfaces 20, 21 are configured for contacting a further carrier or a wall of the oven along the second direction B, and are arranged at opposite sides of the series of containers 2 - 5 along the second direction B. The carrier 1 further comprises a third virtual plane 205 and a fourth virtual plane 206 each substantially perpendicular to the second direction B. The third and fourth virtual planes 205, 206 extends through respectively the third and fourth contact surfaces 20, 21.

The carrier 1 further comprises a third outer air flow region 22 extending between the third virtual plane 205 and the side wall 8, 9 of each container of the series of containers 2 - 5 to, at least during use, allow a substantially vertical flow of air through the carrier 1 adjacent to the side wall 8, 9 of each container 2 - 5. The carrier 1 further comprises a fourth outer air flow region 23 extending between the fourth virtual plane 206 and the side wall 8, 9 of each container of the series of containers 2 - 5 to, at least during use, allow a substantially vertical flow of air through the carrier 1 adjacent to the side wall 8, 9 of each container 2 - 5. The carrier further comprise
a third outer spacing distance D4 defined as a smallest distance between the upper rim 25, 25' of any one of the containers 2 - 5 and the third virtual plane 205. The carrier 1 further comprise a fourth outer spacing distance D5 defined as a smallest distance between the upper rim 25, 25' of any one of the containers 2 - 5 and the fourth virtual plane 206. In the present example, a sum of the third and fourth outer spacing distances D4, D5 is substantially equal the inner spacing distance D3 and substantially equal to the sum of the first and second outer spacing distances D1, D2. Accordingly, the frame 6 is spaced apart by substantially a similar distance from a nearest side wall 8, 9 of each container 2 - 5.

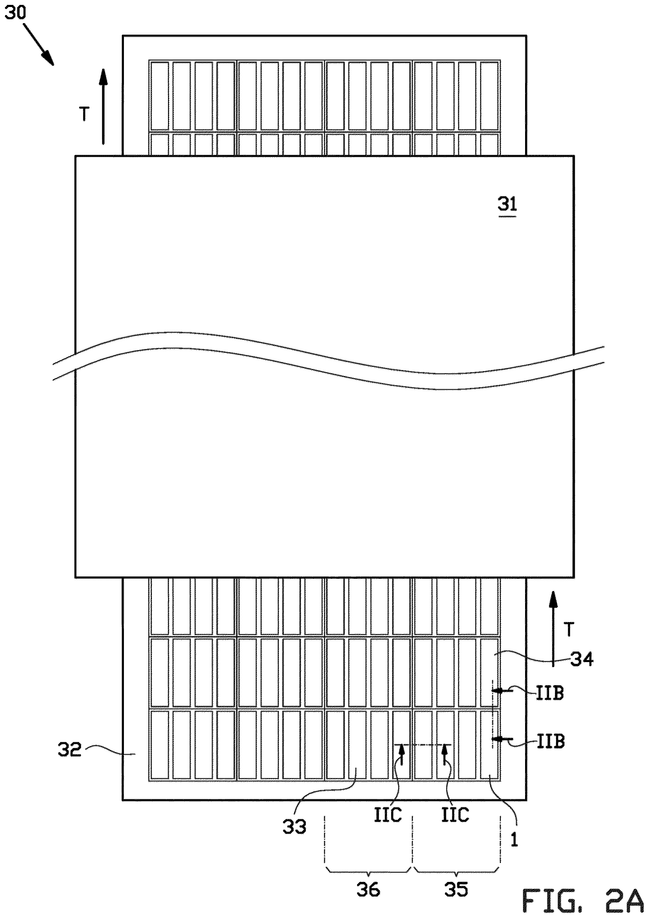

Figure 2A schematically shows first example of an assembly 30 comprising an industrial forced convection oven 31 for providing at least a vertical flow of air through an inner oven space for preparing dough products therein. The assembly 30 further comprises a plurality of carriers 1, 33, 34 according to the first example arranged in a plurality rows 35, 36 on a transport surface 32 of the oven 31. The oven 30 is configured for transporting the rows 35, 36 of carriers 1, 33, 34 through the oven space of the oven 30 along a transport direction T. The plurality of rows 35, 36 comprises at least a first row 35 and second row 36, wherein a first carrier 1 and a second carrier 34 are arranged in the first row 35 and a third carrier 33 is arranged in the second row 36.

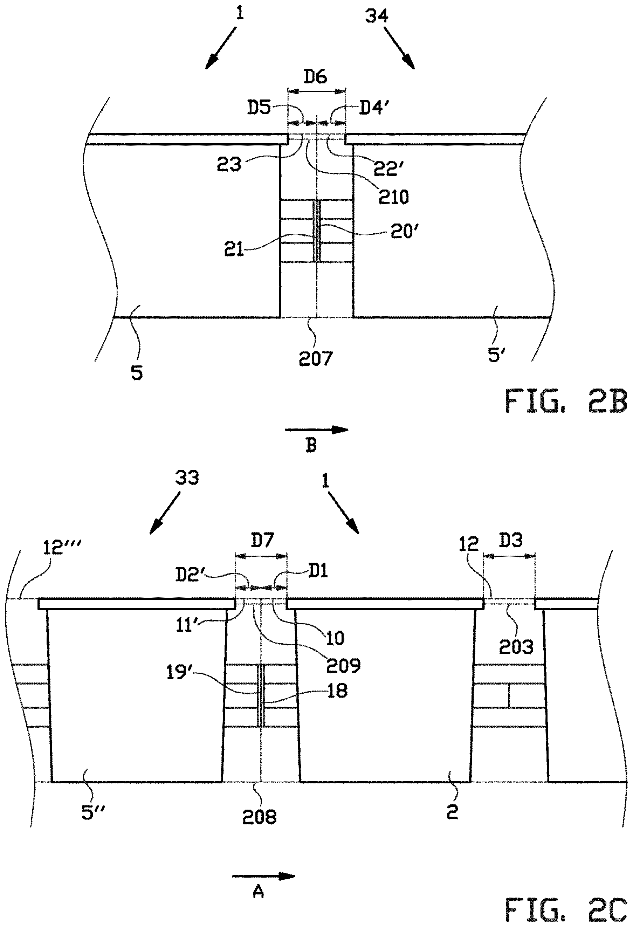

As best seen in the cross-section of figure 2B, the first carrier 1 and the second carrier 34 are adjacently arranged, wherein the fourth contact surface 21 of the second container 5 of the first carrier 1 abuts the third contact surface 20' of the second container 5' of the second carrier 34. As a result, the third outer air flow region 23 of the first carrier 1 is arranged adjacent to the fourth outer air flow region 22' of the second carrier 34, which together provide a first inter carrier air flow region 207 that extends between the side wall of the second container 5 of the first carrier 1 and the side wall of second container 5' to, at least during use, allow a substantially vertical flow of air through the first carrier 1 and the second carrier 34. The figure 2B further shows that the assembly comprises a first inter carrier distance D6 defined as a smallest distance between the upper rim of the second container 5 of the first carrier 1 and the upper rim of the second container 5' of the second carrier 34. The assembly further comprises a first inter carrier surface area defined as an air permeable surface area of a cross-section through the first inter carrier air flow region 207 with a smallest air permeable surface area of any cross-section through the first inter carrier air flow region 207 in a respective plane that extends parallel to the first and second directions A, B of the first carrier 1. In the present example, the cross-section through a plane 210 between the upper rim of the second container 5 of the first carrier 1 and the upper rim of the second container 5' of the second carrier 34 provides the first inter carrier surface area. The first inter carrier surface area is substantially equal to the sum of the third and fourth outer surface areas.

As best seen in the cross-section shown in figure 2C, the first carrier 1 is furthermore adjacently arranged to the third carrier 33, wherein the first contact surface 18 of the first container 2 of the first carrier 1 abuts the second contact surface 19' of the second container 5" of the third carrier 33. As a result, the first outer air flow region 10 of the first carrier 1 is arranged adjacent to the second outer air flow region 11' of the third carrier 33, which together provide a second inter carrier air flow region 208 that extends between the side wall of the first container 2 of the first carrier 1 and the side wall of second container 5" of the third carrier 33. The assembly comprises a second inter carrier distance D7 defined as a smallest distance between the upper rim of the first container 2 of the first carrier 1 and the upper rim of the second container 5" of the third carrier 34. In the present example, the first and second carrier spacings D6 and D7 are each substantially similar to the inner spacing distances D3 of each carrier. The assembly further comprises a second inter carrier surface area defined as an air permeable surface area of a cross-section through the second inter carrier air flow region 208 with a smallest air permeable surface area of any cross-section through the second inter carrier air flow region 208 in a respective plane that extends parallel to the first and second directions A, B of the first carrier 1. In the present example, the cross-section through a plane 209 between the upper rim of the first container 2 of the first carrier 1 and the upper rim of the second container 5'' of the third carrier 33 provides the second inter carrier surface area. In the present example, the inter carrier surface area is equal to the inner surface area of the first carrier.

Figures 2A - 2C illustrate an exemplary 'short-side leading' arrangement, wherein each carrier 1, 33, 34 is arranged on the transport surface 32 such that a longitudinal axis of the containers of each carrier is substantially parallel to the transport direction T of the transport surface 32. It is to be understood that alternatively each or a portion of the carriers 1, 33, 34 may, for example, also be arranged in a `long-side leading' arrangement, wherein the longitudinal axis of said containers is substantially perpendicular to transport direction T.

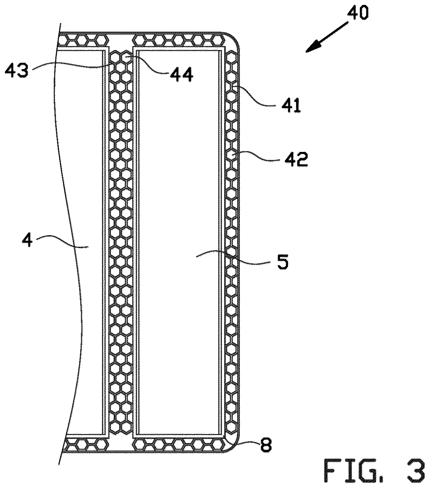

Figure 3 illustrates a partial top down view of a second example of a carrier 40 that is substantially similar to the carrier 1 according to the first example. The carrier 40 shown in figure 3 however comprises an alternative plurality of inner spacer elements 43 and an alternative plurality of outer spacer elements 41. The frame 6 is shown to be spaced apart from the side wall 8 of the second container 5 by spacer elements 41 that have a honeycomb-like structure comprising a plurality of openings 42. Furthermore, each side wall 8 of the series of containers 4, 5 are shown to be spaced apart by spacer elements 43 that have a honeycomb-like structure and comprise a plurality of openings 44. Each of the openings 42, 44 allow a flow of air in a vertical direction therethrough.

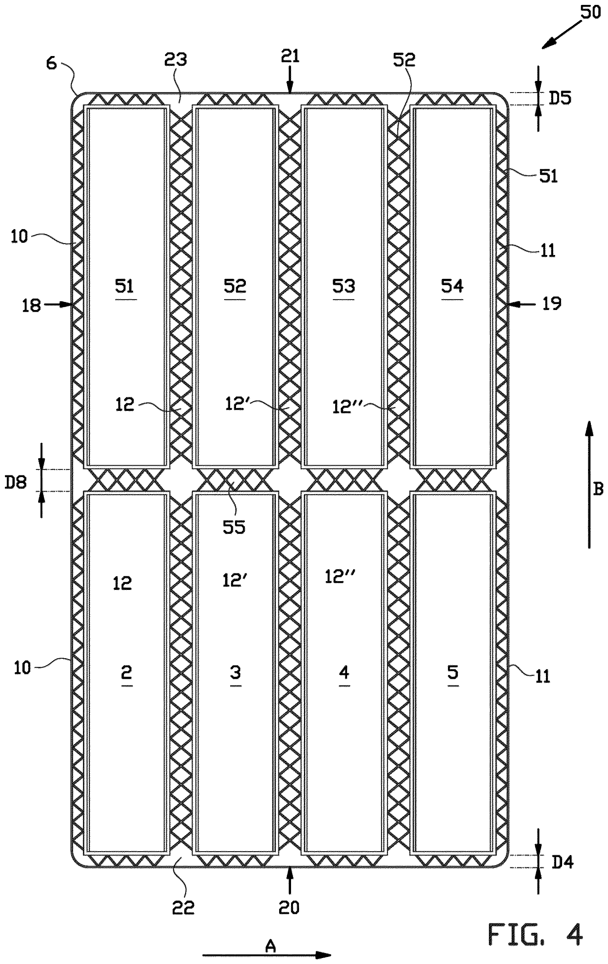

Figure 4 shows a third example of a carrier 50, wherein in contrast to the carriers according to the first and second example, the carrier 50 additionally comprises a second series of containers 51 - 54. Each of the containers of the second series of containers 51 - 54 are shown to be substantially similar to the first series of containers 2 - 5. The containers of the second series of containers 51 - 54 are mutually spaced apart and arranged in series along the first direction A. Furthermore, the second series of containers 51 - 54 comprises at least a third container 51 and a fourth container 54 at opposite ends of the series along the first direction A. Figure 4 shows that the three inner air flow regions 12, 12, 12''' that extend between each neighboring pair of containers of the first series of containers 2 - 5 further extend along the second direction B between the side walls of a neighboring pair of neighboring containers of the second series of containers 51 - 54 to, at least during use, allow a substantially vertical flow of air through the carrier 50 adjacent to said side walls. Furthermore, the first contact surface 18 further extends along the second direction B adjacent to the third container 51. The first outer air flow region 10 further extends between the first virtual plane and the side wall of the third container 51 to, at least during use, allow a substantially vertical flow of air through the carrier 50 adjacent to the side wall of the third container 51. The second contact surface 19 further extends along the second direction B adjacent to the fourth container 54. The second outer air flow region 11 further extends between the second virtual plane and the side wall of the fourth container 54 to, at least during use, allow a substantially vertical flow of air through the carrier 50 adjacent to the side wall of the fourth container 54.

The third and fourth contact surface 20, 21 are shown to be arranged at opposite ends of the carrier 50 along the second direction B. The carrier 50, similar to the previous examples, comprises a third and fourth virtual plane each substantially perpendicular to the second direction B and respectively extending through the third and fourth contact surfaces 20, 21. The third outer air flow region 22 is substantially similar to the previous examples. Furthermore, the carrier 50 comprises a third outer surface area defined as an air permeable surface area of a cross-section through the third outer air flow region 22 with a smallest air permeable surface area of any cross-section through the third outer air flow region 22 in a respective plane that extends parallel to the first and second directions A, B. The fourth outer air flow region in contrast to the previous examples, extends between the fourth virtual plane and the side wall of each container of the second series of containers 51 - 54 to, at least during use, allow a substantially vertical flow of air through the carrier 50 adjacent to the side wall of the each container of the second series of containers 51 -54. Furthermore, the carrier 50 comprises a fourth outer surface area defined as an air permeable surface area of a cross-section through the fourth outer air flow region 23 with a smallest air permeable surface area of any cross-section through the fourth outer air flow region in a respective plane that extends parallel to the first and second directions A, B. Furthermore, figure 4 shows that each container of first series of containers 2 - 5 is spaced apart from each container of the second series of containers 51 - 54 along the second direction B to form an elongated second inner air flow region 55 to, at least during use, allow a substantially vertical flow of air through the carrier 50 adjacent to each side wall. The carrier 50 further comprises a second inner surface area defined as an air permeable surface area of a cross-section through the second inner air flow region 55 with a smallest air permeable surface area of any cross-section through the second inner air flow region 55 in a respective plane that extends parallel to the first and second directions A, B. In the present example, a sum of third and fourth outer surface areas is substantially equal to the second inner surface area.

Furthermore, the carrier 50 comprises a first outer spacing distance D4 defined as a smallest distance between the upper rim of any one of the container of the first series of containers 2 - 5 and the first virtual plane. The carrier 50 further comprises a second outer spacing distance D5 defined as a smallest distance between the upper rim of any one container of the second series of containers 51 - 54 and the second virtual plane. Furthermore, the carrier 50 comprises a second inner spacing distance D8 defined as a smallest distance between any one container of the first series of containers 2 - 5 and any one container of the second series of containers 51 - 54. In the present example, a sum of the first and second outer spacing distances D4, D5 is substantially equal to the second inner spacing distance D8. Furthermore, the carrier 50 further shows a plurality of alternative outer spacing elements 51 and inner spacing elements 52.

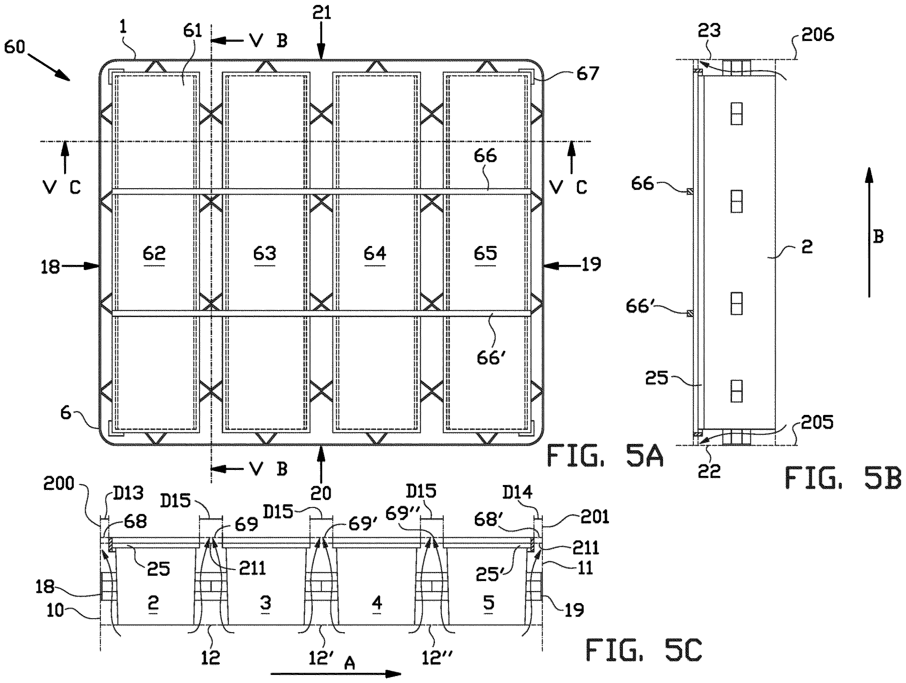

Figures 5A - 5C show a second example of an assembly 60 comprising the carrier 1 according to the first example and a first example of a cover unit 61. The cover unit 61 comprises a series of substantially rectangular cover elements 62 - 65 arranged in series along the first direction A. Each cover element 62 - 65 is arranged on an upper rim 25, 25' of one of the containers of the series of containers 2 - 5 to provide a substantially fully enclosed cavity for holding dough portions. The series of cover elements 62 - 65 comprises a first cover element 62 and a second cover element 65 arranged at opposite ends along the first direction A. Each pair of neighboring cover elements 62 - 65 is spaced apart and connected along the first direction A by several spacing elements in the form of an elongated bar 66, 66'. The cover unit 61 is further provided with four retaining elements 67 arranged at each corner of the cover unit 61 to hold the cover unit 61 to the carrier 1, and substantially prevent the cover unit 61 from moving in first and second directions A, B during handling or baking.

As best seen in figure 5C, the cover unit 61 comprises three inner cover air flow regions 69, 69', 69"' each extending between a pair of neighboring cover elements of the series of cover elements 62 - 65 to, at least during use, allow a substantially vertical flow of air through the cover unit 61 between said neighboring cover elements 62 - 65. The inner cover air flow region 69, 69', 69'' that extends between each pair of neighboring cover elements 62 - 65 is in flow connection with the inner air flow region 12, 12', 12" of the carrier 1 that extends between the pair of neighboring containers 2 - 5 on which said pair of neighboring cover elements 62 - 65 is arranged. The cover unit 61 comprises an inner cover surface area defined as an air permeable surface area of a cross-section through one of the inner cover air flow regions 69, 69' , 69" with a smallest air permeable surface area of any cross-section through any one of the inner cover air flow regions 69, 69', 69" in a respective plane that extends parallel to the first and second directions A,B.

The cover unit 61 further comprises a first outer cover air flow region 68 extending between the first cover element 62 and the first virtual plane 200 to, at least during use, allow a substantially vertical flow of air through the cover unit 61 adjacent to the first cover element 62. The first outer cover air flow region 68 is in flow connection with the first outer air flow region 10 of the carrier 1. The cover unit 61 further comprises a first outer cover surface area defined as an air permeable surface area of a cross-section through the first outer cover air flow region 68 with a smallest air permeable surface area of any cross-section through the first outer cover air flow region 68 in a respective plane that extends parallel to the first and second directions A, B. The cover unit 61 further comprises a second outer cover air flow region 68' extending between the second cover element 65 and the second virtual plane 201 to, at least during use, allow a substantially vertical flow of air through the cover unit 61 adjacent to the second cover element 65. The second outer cover air flow region 68' is in flow connection with the second outer air flow region 11 of the carrier 1. The cover unit 61 further comprises a second outer cover surface area defined as an air permeable surface area of a cross-section through the second outer cover air flow region 68' with a smallest air permeable surface area of any cross-section through the second outer cover air flow region 68' in a respective plane that extends parallel to the first and second directions A, B. In the present example, a sum of the first and second outer cover surface areas is substantially equal to the inner cover surface area.

The cover unit 61 further comprises a first cover outer spacing distance D13 defined as a smallest distance between the first cover element 62 and the first virtual plane 200. The cover unit 61 further comprises a second outer cover spacing distance D14 defined as a smallest distance between the second cover element 65 and the second virtual plane 201. The cover unit 61 further comprises an inner cover spacing distance D15 defined as a smallest distance between the cover elements of any one pair of neighboring cover elements 62 - 65. In the present example, a sum of the first and second cover outer spacing distances D13, D14 is substantially equal to the inner cover spacing distance D15.

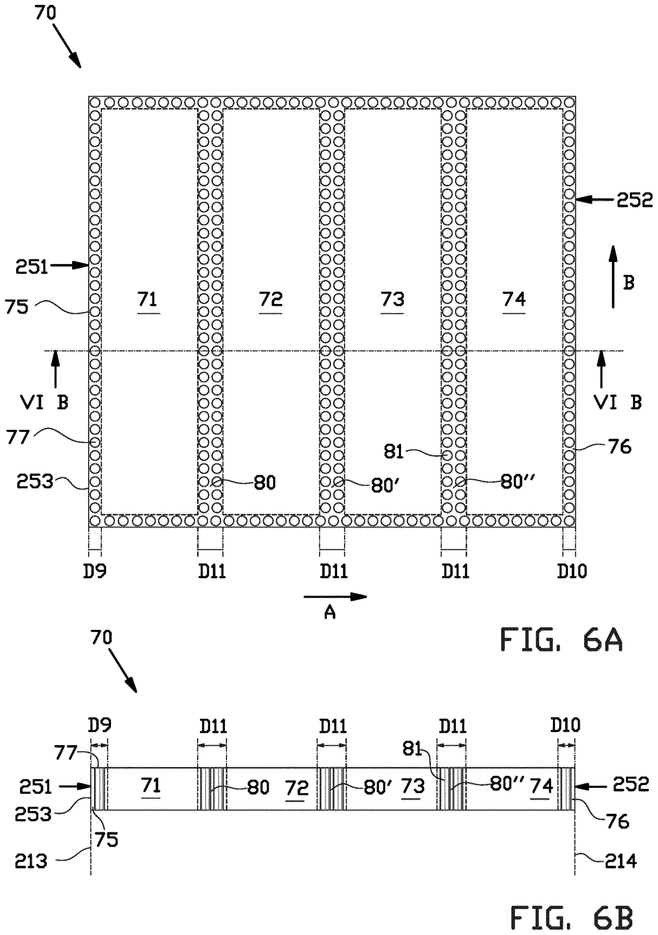

Figures 6A and 6B show a second example of a cover unit 70 comprising a series of substantially rectangular cover elements 71 - 74 for covering a series of containers of a carrier to provide a series of substantially enclosed cavities for holding dough portions. The cover unit 70 has a substantially plate-like shape. The cover elements of the series of cover elements 71 - 74 are shown to be arranged in series along a first direction A. Furthermore, each cover element 71 - 74 extends substantially parallel to the first direction A and a second direction B substantially perpendicular to the first direction A. The series of cover element comprises a first cover element 71 and a second cover element 74 arranged at opposite ends of the series along the first direction A. The cover unit 70 comprises three inner air permeable sections 80, 80', 80'' each interposed between a pair of neighboring cover elements 71 - 74 to, at least during use, allow a flow of air substantially perpendicular to the first and second directions A, B, or a vertical direction, through the cover unit 70 between said pair of neighboring cover elements 71 - 74. The cover unit 70 comprises inner cover surface area defined as an air permeable surface area of a cross-section through one of the inner air permeable sections 80, 80', 80" with a smallest air permeable surface area of any cross-section through any one of the inner air permeable sections 80, 80', 80" in a respective plane that extends parallel to the first and second directions A, B. Each of the inner air permeable sections 80, 80', 80" is shown to comprise a plurality of openings 81 for allowing a flow of air therethrough. Accordingly, the inner cover surface area is provided by a surface area of each opening 81 of one of the inner air permeable sections 80, 80', 80'' in a plane parallel to the first and second directions A, B.

The cover unit 70 further comprise an outer rim 75 that envelops all cover elements 71 - 74, and that comprises a first outer surface 250 and a second outer surface 251. The first and second outer surfaces 250, 251 may be configured for contacting a further cover unit or a wall of an oven in the first direction A. The first and second outer surface 250, 251 extend substantially parallel to the second direction B and face away from the series of cover elements 71 - 74. The cover unit 70 further comprises a first outer air permeable section 253 directly adjacent to the first cover element 71, wherein the first outer surface 251 of the outer rim 75 is formed by an outer surface of the first outer air permeable section 253. The cover unit further comprises a second outer air permeable section 76 directly adjacent to the second cover element 74, wherein the second outer surface 252 of the outer rim 75 is formed by an outer surface of the second outer air permeable section 76.

The cover unit 70 further comprises a first virtual cover plane 213 substantially perpendicular to the first direction A and that extends through the first outer surface 251. The cover unit 70 further comprises a first cover outer air flow region extending between the first cover element 71 and the first virtual cover plane 213 to, at least during use, allow a substantially vertical flow of air through the cover unit 70 adjacent to the first cover element 71. The cover unit 70 further comprises a first cover outer surface area defined as an air permeable surface area of a cross-section through the first cover outer air flow region with a smallest air permeable surface area of any cross-section through the first cover outer air flow region in a respective plane that extends parallel to the first and second directions A, B.

The cover unit 70 further comprises a second virtual cover plane 214 substantially perpendicular to the first direction A and that extends through the second outer surface 252. The cover unit 70 further comprises a second cover outer air flow region extending between the second cover element 74 and the second virtual cover plane 214 to, at least during use, allow a substantially vertical flow of air through the cover unit 70 adjacent to the second cover element 74. The cover unit 70 further comprises a second cover outer surface area defined as an air permeable surface area of a cross-section through the second cover outer air flow region with a smallest air permeable surface area of any cross-section through the second cover outer air flow region in a respective plane that extends parallel to the first and second directions A, B. In the present example, a sum of the first and second cover outer surface areas is substantially equal to the cover inner surface area. The first and second outer air permeable sections 253, 76 are shown to comprise a plurality of openings 77 for allowing a flow of air therethrough. Accordingly, the first and second outer cover surface areas are provided by a surface area of each opening 77 of respectively the first and second outer air permeable sections 253, 76 in a plane parallel to the first and second directions A, B.

The cover unit 70 further comprises a first cover outer spacing distance D9 defined as a smallest distance between the first cover element 71 and the first virtual cover plane 213. The cover unit 70 further comprises a second cover outer spacing distance D10 defined as a smallest distance between the second cover element 74 and the second virtual cover plane 214. The cover unit 70 further comprises an inner cover spacing distance D11 defined as a smallest distance between the cover elements of any one pair of neighboring cover elements 71 - 74. In the present example, a sum of the first and second cover outer spacing distances is substantially equal to the inner cover spacing distance. Furthermore the first and second cover outer spacing distances are substantially equal.

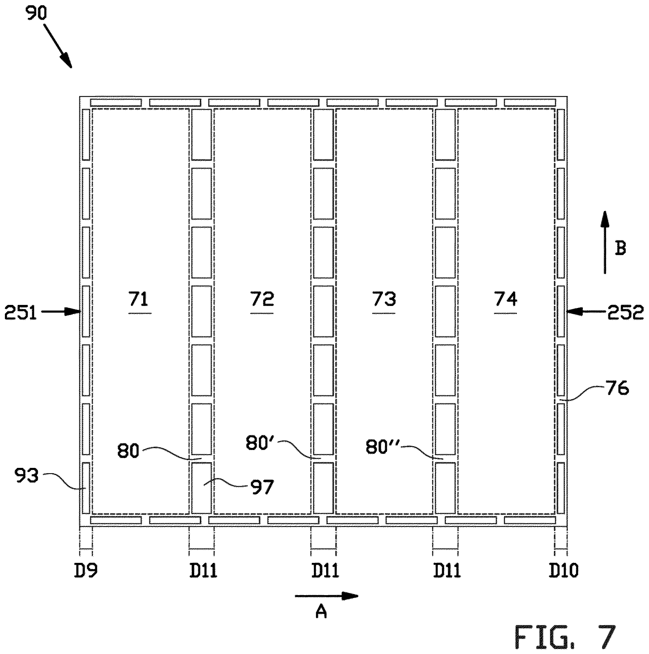

Figure 7 shows a third example of a cover unit 90 that is substantially similar to the second example of the cover unit 70. In contrast to the second example, the cover unit 90 of figure 7 is provided with substantially rectangular elongated openings 93, 97. Here, a surface area of each opening 93 present in the first and second outer air permeable regions 91, 92 is substantially half of the surface area of each of the openings 97 present in each of the inner air permeable sections 96, 96', 96" in a plane parallel to the first and second directions A, B.

In summary, the invention relates to a carrier, an assembly and a method for preparing dough products. The carrier comprises a series of containers arranged in series along a first direction comprising a first and second container at opposite ends of the series. Each pair of neighboring containers are spaced apart along the first direction to form an elongated inner air flow region. The carrier comprises a second direction perpendicular to the first direction. The carrier further comprises a first and second contact surface at opposite ends of the series forming a first and second elongated outer air flow region. A sum of a smallest air permeable surface area of the first and second outer air flow regions is 0.8 - 1.2 times a smallest air permeable surface area of one of the inner air flow regions based on a cross-section through said regions parallel to the first and second directions.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. A carrier (1, 40, 50) for preparing dough products, in particular baking bread products, in an oven (31), wherein the carrier comprises:
- a series of containers (2 - 5) arranged mutually spaced apart and arranged in series along a first direction (A), wherein each container of the series of containers comprises a bottom wall (7) and a side wall (8, 9) to provide a cavity for holding dough portions, wherein the bottom wall of each container extends substantially parallel to the first direction and a second direction (B) perpendicular to the first direction,
wherein the series of containers comprises at least a first and second container (2, 5) at opposite ends of the series along the first direction,
- one or more inner air flow regions (12, 12', 12'') each extending between the side walls of a pair of neighboring containers of the series of containers to, at least during use, allow a substantially vertical flow of air through the carrier between the side walls of said neighboring containers,
- an inner surface area defined as an air permeable surface area of a cross-section through one of the inner air flow regions with a smallest air permeable surface area of any cross-section through any of the inner air flow regions in a respective plane (203) that extends parallel to the first and second directions,
- a frame (6) that is attached to the series of containers and that comprises a first contact surface (18) and a second contact surface (19) for contacting a further carrier or a wall of the oven along the first direction, wherein the first contact surface is spaced apart from the side wall of the first container and extends substantially parallel to the second direction, wherein the second contact surface is spaced apart from the side wall of the second container and extends substantially parallel to the second direction,
**characterized in that** the carrier further comprises:
- a first virtual plane (200) substantially perpendicular to the first direction and that extends through the first contact surface,
- a first outer air flow region (10) extending between the side wall of the first container and the first virtual plane to, at least during use, allow a substantially vertical flow of air through the carrier adjacent to the side wall of the first container,
- a first outer surface area defined as an air permeable surface area of a cross-section through the first outer air flow region with a smallest air permeable surface area of any cross-section through the first outer air flow region in a respective plane (202) that extends parallel to the first and second directions,
- a second virtual plane (201) substantially perpendicular to the first direction and that extends through the second contact surface,
- a second outer air flow region (11) extending between the side wall of the second container and the second virtual plane to, at least during use, allow a substantially vertical flow of air through the carrier adjacent to the side wall of the second container, and
- a second outer surface area defined as an air permeable surface area of a cross-section through the second outer air flow region with a smallest air permeable surface area of any cross-section through the second outer air flow region in a respective plane (204) that extends parallel to the first and second directions, and
wherein a sum of the first and second outer surface areas is in a range from 0.8 to 1.2 times the inner surface area.

2. The carrier according to claim 1, wherein the side wall of each container comprises an upper rim (25, 25') and a lower rim (24, 24') that respectively face away from and toward the bottom wall,
wherein the first outer air flow region extends substantially fully along the side wall of the first container between the bottom rim and the upper rim,
wherein the second outer air flow region extends substantially fully along the side wall of the second container between the bottom rim and the upper rim, and
wherein each inner air flow region extends substantially fully between the bottom rim and the upper rim of each side wall of said pair of neighboring containers.

3. The carrier according to claim 2, wherein the carrier further comprises:
- a first outer spacing distance (D1) defined as a smallest distance between the upper rim of the first container and the first virtual plane,
- a second outer spacing distance (D2) defined as a smallest distance between the upper rim of the second container and the second virtual plane, and
- an inner spacing distance (D3) defined as a smallest distance between a pair of upper rims of any one pair of neighboring containers of the series of containers,
wherein a sum of the first and second outer spacing distances is in a range from 0.8 to 1.2 times the inner spacing distance.

4. The carrier according to claim 2 or 3, wherein the side wall of each container of the series of containers further comprises an outer surface (26) that faces away from and substantially envelops the respective cavity of said container,
wherein the outer surface of each side wall comprises a first part facing towards the first contact surface and a second part facing towards the second contact surface, wherein at least the first and second parts of the outer surface of each side wall are freestanding between the lower rim and the upper rim of said side wall,
preferably wherein at least 70 % of the outer surface of each container is freestanding, and more preferably where less than 99 % of the outer surface of each container is freestanding.

5. The carrier according to any one of the previous claims, when dependent on claim 3, wherein the frame further comprises a third contact surface (20) and a fourth contact surface (21) for contacting a further carrier or a wall of the oven along the second direction, wherein the third and fourth contact portions are arranged at opposite sides of the series of containers along the second direction and extend substantially parallel to the second direction,
wherein the carrier further comprises:
- a third virtual plane (205) substantially perpendicular to the second direction and that extends through the third contact surface,
- a third outer air flow region (22) extending between the third virtual plane and the side wall of each container of the series of containers to, at least during use, allow a substantially vertical flow of air through the carrier adjacent to the side wall of each container,
- a fourth virtual plane (206) substantially perpendicular to the second direction and that extends through the fourth contact surface,
- a fourth outer air flow region (23) extending between the fourth virtual plane and the side wall of each container of the series of containers to, at least during use, allow a substantially vertical flow of air through the carrier adjacent to the side wall of each container,
- a third outer spacing distance (D4) defined as a smallest distance between the upper rim of any one of the containers and the third virtual plane,
- a fourth outer spacing distance (D5) defined as a smallest distance between the upper rim of any one of the containers and the fourth virtual plane,
wherein a sum of the third and fourth outer spacing distances is a range from 0.8 to 1.2 times the inner spacing distance.

6. The carrier (50) according to any one the claims 1 - 5, wherein the series of containers is a first series of containers, wherein the carrier further comprises a second series of containers (51 - 54) arranged mutually spaced apart and arranged in series along the first direction, wherein each container of the second series of containers is substantially similar to the first container of the first series of containers,
wherein the second series of containers comprises at least a third and fourth container (51, 54) at opposite ends of the series along the first direction,
wherein the inner air flow regions that extend between each neighboring pair of containers of the first series of containers further extend along the second direction between the side walls of a neighboring pair of neighboring containers of the second series of containers to, at least during use, allow a substantially vertical flow of air through the carrier adjacent to said side walls,
wherein the first contact surface further extends along the second direction adjacent to the third container, wherein the first outer air flow region further extends between the first virtual plane and the side wall of the third container to, at least during use, allow a substantially vertical flow of air through the carrier adjacent to the side wall of the third container, and
wherein the second contact surface further extends along the second direction adjacent to the fourth container, wherein the second outer air flow region further extends between the second virtual plane and the side wall of the fourth container to, at least during use, allow a substantially vertical flow of air through the carrier adjacent to the side wall of the fourth container.

7. The carrier according to claim 6, wherein the frame further comprises a third contact surface and a fourth contact surface for contacting a further carrier or a wall of the oven along the second direction,
wherein the third and fourth contact surfaces extend substantially parallel to the first direction, and are arranged at opposite ends of the carrier along the second direction,
wherein the carrier further comprises:
- a third virtual plane substantially perpendicular to the second direction and that extends through the third contact surface,
- a third outer air flow region extending between the third virtual plane and the side wall of each container of the first series of containers to, at least during use, allow a substantially vertical flow of air through the carrier adjacent to the side wall of the each container of the first series of containers,
- a third outer surface area defined as an air permeable surface area of a cross-section through the third outer air flow region with a smallest air permeable surface area of any cross-section through the third outer air flow region in a respective plane that extends parallel to the first and second directions,
- a fourth virtual plane substantially perpendicular to the second direction and that extends through the fourth contact surface,
- a fourth outer air flow region extending between the fourth virtual plane and the side wall of each container of the second series of containers to, at least during use, allow a substantially vertical flow of air through the carrier adjacent to the side wall of the each container of the second series of containers,
- a fourth outer surface area defined as an air permeable surface area of a cross-section through the fourth outer air flow region with a smallest air permeable surface area of any cross-section through the fourth outer air flow region in a respective plane that extends parallel to the first and second directions,
wherein each container of first series of containers is spaced apart from each container of the second series of containers along the second direction to form an elongated second inner air flow region to, at least during use, allow a substantially vertical flow of air through the carrier adjacent to each side wall,
- a second inner surface area defined as an air permeable surface area of a cross-section through the second inner air flow region with a smallest air permeable surface area of any cross-section through the second inner air flow region in a respective plane that extends parallel to the first and second directions,
wherein a sum of third and fourth outer surface areas is a range from 0.8 to 1.2 times the second inner surface area.

8. An assembly (30) for preparing dough products, in particular baking bread products, in an oven, comprising:
- a first carrier (1) according to the preamble of claim 1,
- a second carrier (33) according to the preamble of claim 1 and arranged adjacent to the first carrier, wherein the first contact surface of the first carrier abuts the second contact surface (19') of the second carrier,
- an inter carrier air flow region (208) that extends between the side wall of the first container of the first carrier and the second container of the second container to, at least during use, allow a substantially vertical flow of air through the first carrier and the second carrier, and
- an inter carrier surface area defined as an air permeable surface area of a cross-section through the inter carrier air flow region with a smallest air permeable surface area of any cross-section through the inter carrier air flow region in a respective plane (209) that extends parallel to the first and second directions of the first carrier,
wherein the inter carrier surface area is in a range from 0.8 to 1.2 times the inner surface area of the first carrier.

9. The assembly according to claim 8, wherein the side wall of each container of the first carrier comprises an upper rim that faces away from the respective bottom wall, wherein the side wall of each container of the second carrier comprises an upper rim that faces away from the respective bottom wall,
wherein a smallest distance between the upper rims of a pair of neighboring containers of the first carrier is in a range from 0.8 to 1.2 times a smallest distance (D7) between the upper rim of the first container of the first carrier and the upper rim of the second container of the second carrier.

10. An assembly (60) comprising a carrier according to any one of the claims 1 - 7 and a cover unit (61) , wherein the cover unit comprises:
- a series of cover elements (62 - 65) arranged mutually spaced apart and arranged in series along the first direction, wherein each cover element is arranged on an upper rim of one of the containers of the series of containers to provide a substantially fully enclosed cavity for holding dough portions,
wherein the series of cover elements comprises at least a first cover element (62) and a second cover element (65) arranged at opposite ends of the series of cover elements along the first direction,
- one or more inner cover air flow regions (69, 69', 69' ') each extending between a pair of neighboring cover elements of the series of cover elements to, at least during use, allow a substantially vertical flow of air through the cover unit between said neighboring cover elements,
wherein the inner cover air flow region that extends between each pair of neighboring cover elements is in flow connection with the inner air flow region that extends between the pair of neighboring containers on which said pair of neighboring cover elements is arranged,
- an inner cover surface area defined as an air permeable surface area of a cross-section through one of the inner cover air flow regions with a smallest air permeable surface area of any cross-section through any one of the inner cover air flow regions in a respective plane (211) that extends parallel to the first and second directions,
- a first outer cover air flow region (68) extending between the first cover element and the first virtual plane to, at least during use, allow a substantially vertical flow of air through the cover unit adjacent to the first cover element, wherein the first outer cover air flow region is in flow connection with the first outer air flow region of the carrier,
- a first outer cover surface area defined as an air permeable surface area of a cross-section through the first outer cover air flow region with a smallest air permeable surface area of any cross-section through the first outer cover air flow region in a respective plane (210) that extends parallel to the first and second directions,
- a second outer cover air flow region (68') extending between the second cover element and the second virtual plane to, at least during use, allow a substantially vertical flow of air through the cover unit adjacent to the second cover element, wherein in the second outer cover air flow region is in flow connection with the second outer air flow region of the carrier, and
- a second outer cover surface area defined as an air permeable surface area of a cross-section through the second outer cover air flow region with a smallest air permeable surface area of any cross-section through the second outer cover air flow region in a respective plane (212) that extends parallel to the first and second directions,
wherein a sum of the first and second outer cover surface areas is in a range from 0.8 to 1.2 times the inner cover surface area.

11. A cover unit (70, 90) comprising a series of cover elements (71 - 74) for covering a series of containers of a carrier to provide a series of substantially enclosed cavities for holding dough portions, wherein the cover elements of the series of cover elements are arranged in series along a first direction, wherein each cover element extends substantially parallel to the first direction and a second direction substantially perpendicular to the first direction,
wherein the series of cover elements comprises at least a first and second cover element (71, 74) arranged at opposite ends of the series along the first direction,
wherein the cover unit further comprises:
- one or more inner air permeable sections (80, 80', 80'') each interposed between a pair of neighboring cover elements to, at least during use, allow a flow of air substantially perpendicular to the first and second directions through the cover unit between said pair of neighboring cover elements,
- an inner cover surface area defined as an air permeable surface area of a cross-section through one of the inner air permeable sections with a smallest air permeable surface area of any cross-section through any one of the inner air permeable sections in a respective plane that extends parallel to the first and second directions,
- an outer rim (75) that is attached to the series of cover elements and that comprises a first outer surface (251) and a second outer surface (252), wherein the first and second outer surfaces each extend substantially parallel to the second direction and face away from the series of cover elements,
- a first virtual cover plane substantially perpendicular to the first direction and that extends through the first outer surface,
- a first cover outer air flow region extending between the first cover element and the first virtual cover plane to, at least during use, allow a substantially vertical flow of air through the cover unit adjacent to the first cover element,
- a first cover outer surface area defined as an air permeable surface area of a cross-section through the first cover outer air flow region with a smallest air permeable surface area of any cross-section through the first cover outer air flow region in a respective plane that extends parallel to the first and second directions,
- a second virtual cover plane substantially perpendicular to the first direction and that extends through the second outer surface,
- a second cover outer air flow region extending between the second cover element and the second virtual cover plane to, at least during use, allow a substantially vertical flow of air through the cover unit adjacent to the second cover element, and
- a second cover outer surface area defined as an air permeable surface area of a cross-section through the second cover outer air flow region with a smallest air permeable surface area of any cross-section through the second cover outer air flow region in a respective plane that extends parallel to the first and second directions, and
wherein a sum of the first and second cover outer surface areas is in a range from 0.8 to 1.2 times the cover inner surface area.

12. The cover unit according to claim 11, wherein the cover unit further comprises:
- a first outer air permeable section (253) directly adjacent to the first cover element and wherein the first outer surface of the outer rim is formed by an outer surface of the first outer air permeable section facing away from the first cover element,
- a second outer air permeable section (76) directly adjacent to the second cover element and wherein the second outer surface of the outer rim is formed by an outer surface of the second outer air permeable section facing away from the second cover element,
wherein the first outer air permeable section, the second outer air permeable section and each inner air permeable section each comprise one or more openings (77, 81) to, at least during use, allow a flow of air substantially perpendicular to the first and second directions through respectively the first outer air permeable section, the second outer air permeable section and each inner air permeable section.

13. An assembly comprising a cover unit according to any one of the claims 11 or 12, wherein the assembly further comprises a carrier according to any one of the claims 1 - 7, wherein each cover element of the cover unit is arranged on an upper rim of one of the containers of the carrier.

14. A method for preparing dough products, in particular baking bread products, in an oven, wherein the method comprises the following steps:
- providing a first carrier according to any one of the claims 1 - 7, and arranging a first dough product in the first container of the first carrier,
- providing a second carrier according to any one of the claims 1 - 7, and arranging a second dough product in the second container of the second carrier,
- arranging the second carrier such that the second portion of the frame of the second carrier abuts the first portion of the frame of the first carrier, and
- preparing the first and second dough products in the oven by providing a substantially vertical airflow through the first carrier and/or second carrier.

15. The method according to claim 14, wherein the method further comprises the following steps:
- after arranging the first dough product in the first container and before preparing the first dough product, providing a first cover unit according to any one of the claims 11 or 12, and arranging each cover element of the first cover unit on an upper rim of one of the containers of the first carrier, and
after arranging the second dough product in the second container and before preparing the second dough product, providing a second cover unit according to any one of the claims 11 or 12, and arranging each cover element of the second cover unit on an upper rim of one of the containers of the second carrier.
